# EUROPEAN PATENT APPLICATION

(11) **EP 1 502 502 A1**
(43) Date of publication of application: **02.02.2005**
(21) Application number: 03717619.5
(22) Date of filing: 17.04.2003
(51) Int. Cl.: A01K 63/00, A63H 23/00

(54) **DISPLAY DEVICE FOR APPRECIATION**

(30) Priority: 18.04.2002 JP 2002116732
(71) Applicant: Eamex Corporation, Suita-shi, Osaka 564-0062 (JP)
(72) Inventor: NAKAYAMA, Minoru, c/o EAMEX CORPORATION, Uho-cho, Osaka 563-0042 (JP); SUGIYAMA, Minoru, c/o EAMEX CORPORATION, Uho-cho, Osaka 563-0042 (JP); KATO, Kenji, c/o EAMEX CORPORATION, Uho-cho, Osaka 563-0042 (JP); ONISHI, Kazuo, c/o EAMEX CORPORATION, Uho-cho, Osaka 563-0042 (JP); SEWA, Shingo, c/o EAMEX CORPORATION, Uho-cho, Osaka 563-0042 (JP)
(74) Representative: Legg, Cyrus James Grahame
(86) International application number: PCT/JP2003/004880
(87) International publication number: WO 2003/086065

(57) **Abstract**

A water tank for appreciation provided with a water storage, a water pipe, an air bubble generating member, wherein said water storage is provided with a water inlet port and an opening portion and said opening portion is so provided that the convection can be generated in said water tank for appreciation by the liquid current from a water tank through said opening portion, and said water storage is installed upwardly of a water tank for appreciation and one end of said water pipe is connected to an inlet water port of a water storage and the other end is so installed that it is in the liquid when the liquid is filled in a water tank for appreciation and an air bubble generating member is so installed that it can lead the air bubble inside of a water pipe in the peripheral portion of said other end of said water pipe and a display device for appreciation using said water tank for appreciation are used.

## Description

### Field of the Invention

The present invention relates to a display device for appreciation regarding pseudo space such as in the water or in the air and regarding creatures and/or objects which float in the air represented by fish, submarines, spaceships, airships, butterflies, birds, and the like.

### Background Art

Recently, for a purpose of refreshing feelings of residents and the like indoors, interiors with motifs in the water or in the air are provided at homes or in the offices. As such interiors, examples of interiors with motifs in the water include aquariums in which seaweeds or tropical fish are put in a simple water tank. Recently, aquariums in which aquatic animals such as tropical fish and the like or aquatic plants such as seaweeds and the like are kept in a water tank are used not only at home but also at shops and the like as a display for visual effects. In order to keep aquatic animals such as tropical fish and the like which are real creatures, living conditions inherent to the creatures including foods, water temperature, and the like should be maintained and this should accompany labor cost, maintenance cost, and the like.

In order to reduce such labor, a display device is proposed in Japan unexamined patent publication Hei7-230259 provided with pseudo models of aquatic animals such as fish models and the like, and by generating the air bubble from a ventilation member which is installed at the bottom wall of a water tank to generate water flow in a water tank and to make viewers feel as if pseudo models of aquatic animals such as fish models are swimming as a pseudo aquarium in which daily feeding is not required and environmental maintenance such as temperature maintenance and the like are easy

However, since the above display device generates water flow in a water tank by directly generating air bubble in the water tank in which pseudo creature models are floating, creature models get an imbalance and behave unnaturally since air bubble adheres to the creature models. In addition, in peripheral domains where air bubble near the air bubble generating member rises, when the creature models go in said domains, the aquatic animal pseudo models are pushed upward near the water surface by air bubble, they show unnatural behavior, lying down. The same is applied when pseudo creature models are replaced by models such as submarines other than fish. In addition, when this water tank for appreciation is made to be a display which expresses a space other than underwater space, for example, cosmic space where spaceships and the like exist, or a space with a motif where birds and butterflies and the like exist, since rising air bubble exists around spaceships, birds, butterflies, and the like, this water tank for appreciation is not suitable for a display which expresses a space other than underwater space.

The object of the present invention is to provide a water tank for appreciation which does not cause imbalance of models by air bubble adhesion, sudden rising of models in the vicinity of air bubble generating member or lying down in the vicinity of a water surface in order that the models such as creature models represented by fish models, for example, naturally swimming show more natural movement and behavior in the water tank, and further, to provide a water tank for appreciation and a display device for appreciation capable of expressing the space other than underwater space.

### The disclosure of the invention

The present invention relates to a water tank for appreciation provided with a water storage, a water pipe, and an air bubble generating member, wherein said water tank is provided with a water inlet port and an opening portion and said opening portion is provided so that the generation of the convection is available in said water tank for appreciation by the liquid current from the water storage through said opening portion, and said water storage is installed upwardly of a water tank for appreciation and one end of said water pipe is connected to a water inlet port portion of a water storage and at the same time, the other end is so installed that it is in the liquid when liquid is filled in a water tank for appreciation and air bubble generating member is so installed that the air bubble can be led into inside of said water pipe. Further, it is a display device for appreciation provided with the models in the liquid provided inside of said water tank for appreciation.

### SUMMARY OF THE INVENTION

The preferred embodiments of the present invention have been developed in view of the above-mentioned and/or other problems in the related art. The preferred embodiments of the present invention can significantly improve upon existing methods and/or apparatuses.

### BRIEF DESCRIPTION OF THE DRAWINGS

The preferred embodiments of the present invention are shown by way of example, and not limitation, in the accompanying figures, in which:
Fig.1 is a sectional view showing an example of the embodiment when the water tank for appreciation of the present invention is used for a display which expresses underwater world.
Fig.2 is a view showing an example of the embodiment of an octopus model used for the water tank for appreciation of the present invention.
Fig.3 is a top view of an octopus model in Fig.2.
Fig.4 is a sectional view taken along the line A-A of an octopus model in Fig.3.
Fig.5 is a view showing an example of the embodiment of a jelly fish used for the water tank for appreciation of the present invention.

### DETAILED DESCRIPTION OF THE PREFERRED EMBODIMENTS

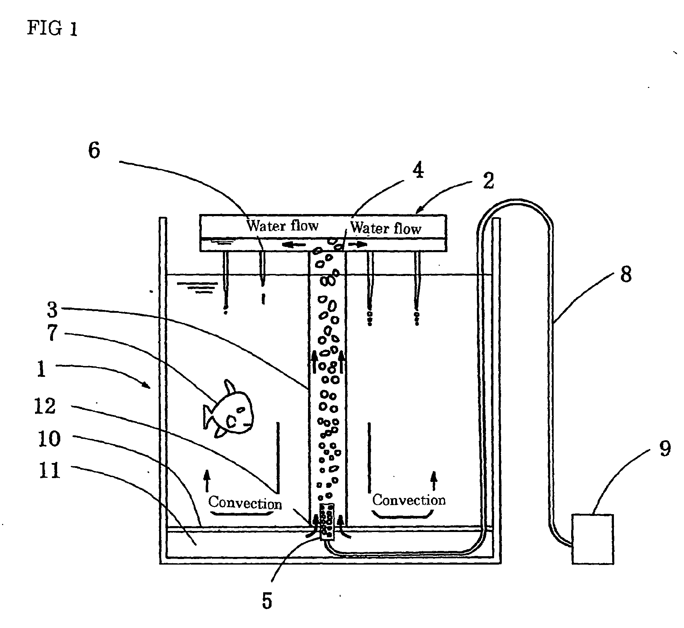

Hereinafter, the embodiments of the present invention are shown using figures. In Fig.1, water tank for appreciation 1 is installed with water storage 2 upwardly and said water storage is equipped with water pipe 3. One end of said water pipe is connected to a water tank at water inlet port 4 of a water storage and at the other end, air bubble generating member 5 is installed. Due to lifting pump operation by aeration of air bubble generated from said air bubble generating member, generation occurs from downward of water pipe to upward through a water inlet port, liquid is transported to a water storage. Liquid transported by air bubble aeration is stored in water tank 2, and it free-falls from opening portion 6 provided at the bottom of water storage 2 and falls onto liquid in a water tank for appreciation thereby causing convection in liquid of a water tank for appreciation. Since fish model 7 moves in a water tank for appreciation by surfing convection of liquid in this water tank for appreciation, it behaves as if it were a real fish moving around. By the behavior of the fish in this water tank for appreciation, an effect of softening the people's heart can also be obtained. As said liquid, water type solvents including water as main ingredient or oil type solvents whose main ingredient is organic solvent such as alcohol and the like can be used and although they are not specifically limited, water type solvents are preferable since it is easy to obtain and since it is hard to vaporize, and as oil type solvents, liquid with good fluidity is preferable. As said water type solvents, for the convenience of suspending said fish model, electrolyte or alcohol may be included for adjusting specific gravity depending on cases.

It is preferable that said water tank for appreciation is formed by transparent materials represented by transparent acrylic resin or glasses and it may be a cube, a cylindrical shape, or polygonal column shape. For information, although the embodiment of the present invention in Fig.1 is an embodiment which expresses the space with an underwater motif, when the water tank for appreciation of the present invention expresses aerial regions and the like, fish models can be replaced by space ship models, butterfly models, bird models, and the like. In this case, expression that as if real space ships, butterflies, birds and the like were flying in the air is available.

Said water tank can store liquid therein and as long as a water inlet port which leads liquid to a water storage through a water pipe and an opening portion which enables the convection to generate in said water tank for appreciation by liquid flow from water storage through said opening portion are provided, shapes, sizes and the like are not specifically limited and it may be disc-shaped, quadrilateral, or polygonal plate. Although said water inlet port is not specifically limited regarding shapes, bore diameters, and the like, and it may be the same shape and bore diameter, a circular shape of a water pipe is preferable since it can prevent from generating in a specific direction.

An opening portion provided in said water storage may be provided so that the convection can be generated in said water tank for appreciation by the liquid flow through said opening portion from a water storage, that the liquid stored in a water storage can free-fall, and that the stored liquid can fall in the liquid in a water tank for appreciation. In Fig.1, although an opening portion is provided at a bottom surface of water storage 2, the opening portion may be provided as long as it can generate the convection in liquid in a water tank for appreciation by falling in liquid of a water tank for appreciation and it may be provided on a side surface of a water storage. An install position of said opening portion is not specifically limited as long as the opening portion can generate convection effectively and it may be installed near a wall surface of a water tank for appreciation, or it may be installed near the center of a water tank for appreciation, and the installation place of the opening portion may appropriately be provided in order to obtain desired convection. Said opening portion may be provided with proper bore diameter appropriately so that the convection in a water tank for appreciation may not have excessive speed and the number of opening portions can appropriately be provided in relation to the bore diameter of an opening portion.

In said water pipe, one end is connected to a water inlet water port of a water storage installed upwardly of a water tank for appreciation and the other end is installed so as to pump up the liquid in a water tank for appreciation. Although said other end may be installed near the upper aperture portion of a water tank for appreciation when a water tank for appreciation is in a state of full capacity all the time, it is preferable that the other end is installed in the inner lower portion of a water tank for appreciation, and further, it is more preferable that the other end is installed near the bottom wall. Said water pipe is not specifically limited as long as it is a pipe with a diameter capable of providing satisfactory amount of water which is capable of letting air bubble generated from an air generation member pass and which is capable of generating convection in a water tank for appreciation by free-falling from a water storage, however, for energy efficiency of the amount of air bubble fed in and of liquid transported to a water storage, the bore diameter is preferably not greater than 30mm. Materials of said water pipe are not specifically limited as long as they have good resistance to corrosion. When transparent acryl is used for said water pipe, since wandering air bubble can be appreciated, a water tank for appreciation is available with good visual effect and further, varieties of visual effects can be obtained by lighting the water tank. Further, by making the color of said water pipe same as a background color, it can minimize and conceal the appearance of said water pipe in a water tank for appreciation. Since said water pipe can function as a column support of a water storage by providing one water pipe near the central portion of a water tank for appreciation as in Fig. 1, a device for retaining a water storage on the upper portion of a water tank for appreciation can be omitted, however, plurality of water pipes can be provided. For information, although said water pipe is preferably linear when it functions as a column support of a water storage for securing strength, it may be spiral and as long as water can be transported to a water storage by lifting effect of air bubble, shape thereof is not specifically limited.

Said air bubble generating member is not specifically limited as long as it can generate air bubble, and as long as it is a member capable of generating air bubble which can generate liquid flow capable of transporting liquid to a water storage in a water pipe and it may be a porous thecal member or a perforated tube. In Fig.1, air bubble generating member 5 is connected to air carrier 9 through pipe 8. Air conveyor 9 is not specifically limited as long as it can transport air through pipe 8 and a publicly known pump can be used, however, if an air bubble generating member is a member capable of generating gas by itself, there is no particular need for installing air conveyor and through pipe. Said air bubble generating member may be installed in said water pipe or the lower portion of the other end of said water pipe as long as said air bubble generating member is so installed that air bubble can be led from the aperture of said other end of a water pipe.

In Fig.1, near the bottom surface of water tank for appreciation 1, divider plate 10 which is set parallel to the bottom surface is installed. In a water tank for appreciation of the present invention, for example, by providing said divider plate, water storage portion under the bottom 11 is provided which is divided by divider plate 10 near the bottom surface of said water tank for appreciation, and by connecting the other end of water pipe to water inlet port 12 which has the same diameter of that of water pipe provided in said divider plate, said water storage portion under the bottom and said water storage are connected by water pipe, liquid stored in water storage portion under the bottom may be transported to a water storage through a water pipe. In other words, in a water tank for appreciation of the present invention, when said divider plate is used, the present invention is aforementioned water tank for appreciation and further, in the bottom direction of water tank for appreciation, when a divider plate is installed and said water pipe connects the water storage portion under the bottom sectioned by the bottom of said water tank for appreciation and a divider plate and said water storage, the present invention is a water tank for appreciation which is installed vertically near the central portion of a water tank for appreciation. By providing said divider plate, said divider plate functions substantially as an inlet which inhales liquid of said water pipe and since it means that the inlet is provided in a wide range, inhalation pressure of water pipe generated by lifting effect of air bubble decreases by proliferation and it becomes easy to prevent the fish models and the like from being sucked to said water pipe and further, since the device like appearance can be avoided since the inlet portion of the other end of water pipe is hidden, which is preferable for appreciation. As said divider plate, by using the plate provided with innumerable openings represented by porous plate and meshes, filtering function can be provided, which is preferable.

In the water tank for appreciation of the present invention, by the liquid flow falling from a water storage, the convection can be generated in a liquid stored in a water tank for appreciation and this convection originally makes the viewer feel that the fish models floating on one place in the liquid swim, however, the fish model with a fin provided with polymeric actuator may be used. In other words, the present invention is the water tank for appreciation provided with a water storage, a water pipe, and an air bubble generating member, wherein said water storage is provided with a water inlet port and an opening portion, and said opening portion is so provided that the convection can be generated in said water tank for appreciation by the liquid flow from the water storage through said opening portion, and said water storage is installed upwardly of a water tank for appreciation and one end of said water pipe is connected to a water inlet port of a water storage and the other end is so installed in a water tank for appreciation that the said end is in liquid when water is filled in the water tank for appreciation, and air bubble generating member is so installed that can lead air bubble inside of said water pipe in the peripheral portion of said other end of said water pipe, and further, provided with the fish models equipped with polymeric actuator and liquid. The fish models equipped with said polymeric actuator is provided with a power source and a relay circuit inside thereof and by using polymeric actuator for the whole pectoral fin and/or tail fin or their base portion, the fish models can swim spontaneously. With the water tank for appreciation of the present invention, the convection in the upward and downward direction can be generated and with the forward movement of said fish models, the provision of a display in which the fish models naturally move is available.

It is preferable that in said water tank for appreciation, the outer diameter for in-room use is 50 to 1000mm when the shape is cylindrical. When the outer diameter of said water tank for appreciation is less than 50mm, it is difficult to express the desirable space since the space is too small. When the outer diameter of said water tank for appreciation is greater than 1000mm, installation of said water tank for appreciation requires labor since the large place for installing the display of a water tank for appreciation. When said water tank for appreciation is used for a display device for in-room use, the outer diameter of said water tank for appreciation can be made to be 50 to 500 mm and when it is used for a water tank for appreciation on the table, the outer diameter of said water tank for appreciation can be made to be 150 to 200 mm. When the shape of said water tank for appreciation is rectangular, column shaped, the size can be made to be the corresponding volume of cylindrical water tank for appreciation as mentioned above. Regarding the height of said water tank for appreciation, the height can be made to be the one which corresponds to the size of models put inside of the water tank for appreciation and the movement required for the models.

When said water tank for appreciation is a cylindrical water tank and the outer diameter of the water tank for appreciation is 150 to 200 mm, for example, a cylindrical water storage with an inner diameter of 60mm can be used. Since this water storage generates the convection in the liquid which is stored inside of a water tank for appreciation with a height of 300 mm, for example, 6 opening portions with a diameter of 2 to 3 mm can be provided. The opening portions provided at the bottom potion of this water storage can be provided in a way that the line which connects from the center on a surface of the bottom portion of water storage to each opening portion makes 120 ° each other.

Said water tank for appreciation can provide at least 2 coils wound along the periphery of said water tank for appreciation. Since electromagnetic field generates when turned on electricity to the coils wound along the periphery of said water tank for appreciation, said fish models need not have a power source such as batteries and the like when said fish models are provided with coils for power generation. Therefore, the display device for appreciation using fish models provided with coils for power generation as a means to obtain driving electric power of said actuator elements can save exchange of power sources such as batteries and the like and since it does not show the viewer of the display the operation of battery exchange, it is excellent as a display device for appreciation.

The coils to be provided not less than 2 along the peripheral of said water tank for appreciation are the coils for generating electromagnetic field as mentioned above. In said water tank for appreciation provided with not less than 2 coils for generating magnetic field, since the strength of the electromagnetic field is relatively uniform inside of the water tank for appreciation compared with a water tank for appreciation provided with 1 coil for generating electromagnetic field, control of the movement of the models provided with coils for generating electromagnetic field to make uniform is easy. It is preferable that the coils wound along the periphery of said water tank for appreciation are so provided that the distance between neighboring coils are set to be the length of not greater than 200 % of a coil diameter in said water tank for appreciation. It is further preferable that the coils wound along the periphery of said water tank for appreciation are so provided that the distance between neighboring coils are set to be the length of 80 to 120 % of a coil diameter in said water tank for appreciation and further, it is more preferable that the distance between neighboring coils is substantially the same as the coil diameter. When the coils for generating electromagnetic field are so provided in said water tank for appreciation that the distance between neighboring coils are set to be within the above range, uniform electromagnetic field can be obtained effectively and also a beautiful appearance of a water tank for appreciation can be provided. Regarding the coils provided in said water tank for appreciation, when said water tank for appreciation is one tank, it is preferable that these coils are set in two places of upper portion and lower portion of said water tank for appreciation so that these coils do not obscure the view. When said water tank for appreciation is divided into substantially two and more in the upper and lower direction, by providing said coils in the boundary portion of the section, three or more coils for generating magnetic field can be provided without obscuring the view. For information, in order to obtain uniform electromagnetic field inside of said water tank for appreciation, coils for generating electromagnetic field can be provided for the water tank for appreciation so that the distance between neighboring coils are set to be the length of not greater than 200 % of a coil diameter. In addition, in order to make induced current generating in the coils for power generation substantially constant, it is preferable that the coils for generating the electromagnetic field turn on electricity so that the electromagnetic field is generated in the same direction in each coil.

The diameter of coils which are provided two or more in the periphery of said water tank for appreciation is not specifically limited. Since said coils are wound along the periphery of said water tank for appreciation, said coil diameter may be substantially the same length as inner diameter or outer diameter of said water tank for appreciation.

Although the number of turn of coils wound along the periphery of said water tank for appreciation is not specifically limited, it is preferably 20 to 200 turns, and more preferably, 40 to 60 turns, and further preferably, 50 turns. In addition, when the number of turn of coils is greater than 200 turns, coils are heated and therefore, the temperature inside of the display for appreciation tends to rise and the liquid stored inside of a display for appreciation is liable to vaporize. When the number of winding of coils is less than 20 turns, the strength of magnetic field generated by coils becomes weak and induced current of the coils for power generation becomes weak. The water tank for appreciation with two or more coils provided which are wound with the number of turn within the said range can preferably be used for a display device for appreciation since it easily provides coils for power generation which is included in the models in the liquid stored inside of the water tank for appreciation with a certain induced current. Although the voltage at the time of turning on electricity to the coils for generating the magnetic field provided in the water tank for appreciation is not specifically limited, it can be used within the range of 100 V to 200 V.

Regarding said water tank for appreciation, explanation was made in the case where the fish models are used. In said display device for appreciation, instead of fish models, by employing such creatures and/or objects that float in the air space represented by submarines, spaceships, airships, butterflies, birds, and the like, display device for appreciation regarding pseudo space such as underwater or in the air.

The models put in the liquid which is stored inside of said water tank for appreciation are not limited to fish models and at least one model for creatures among the group of fish models, jelly fish models, octopus models, snake models, shell models, and sea weed models. In addition, since said models of creatures are not limited to aquatic animals and models of creatures depending on motifs of the display can be used, said models of creatures may be the models of invertebrates and/or vertebrates.

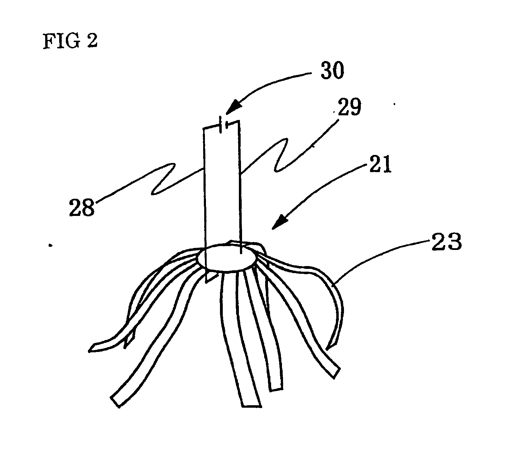

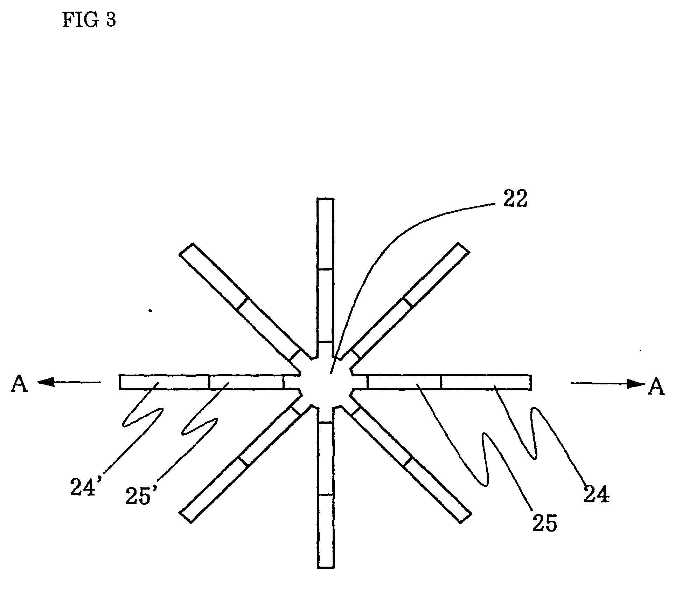

Fig. 2 is a figure which shows one embodiment of an octopus model which can be used as said display device for appreciation. Octopus model 21 is provided with 8 legs in body 22. Fig.3 is a top view of the octopus model. In the octopus model of Fig. 3, leg portion 23 is composed of 3 portions. Said leg portion is composed of tip end portion 24, middle portion 25, and a base portion which leads to a body portion. In Figs. 2 and 3, the leg portion of octopus model 21 is formed by actuator elements. Said actuator elements can receive electric supply from a power source or coils for power generation. Since electric power is supplied to said actuator elements, the actuator elements used for leg portion starts curvature movement and it moves like a leg portion of octopus.

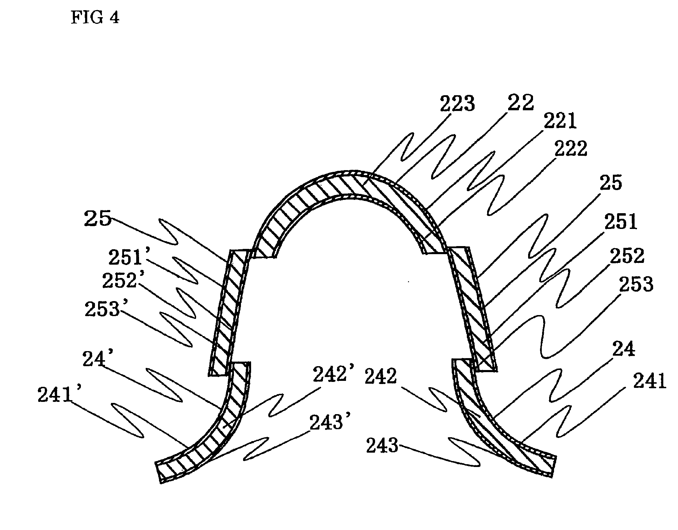

Fig.4 is a sectional view taken along the A-A line of the octopus models of Fig.3. Each of body portion 22, middle portion 25, and tip end portion 24 is composed of actuator elements. In tip end portion 24, metal layer 241 and metal layer 242 are laminated through polymeric electrolytes 243 therebetween. In middle portion 25, metal layer 251 and metal layer 252 are laminated through polymeric electrolyte layer 253 therebetween. Regarding body portion 22 which includes base portion, likewise, metal layer 221 and metal layer 222 are laminated through polymeric electrolytes 223 therebetween. As actuator elements in which these two metal layers used as a body portion, a middle portion and a tip end portion laminate through polymeric electrolytes therebetween, publicly known ones can be used. Metal layer 221 is connected to conductive wire 28 and metal layer 222 is connected to conductive wire 29. With the connection of conductive wire 28 and conductive wire 29 with power source 30, voltage is applied to the actuator element which is body portion 22. In Fig.4, metal layer 221, metal layer 252, and metal layer 252' are installed so that they contact with each other. Each actuator element is so installed that metal layer 252', metal layer 241', metal layer 252', and metal layer 241' contact with each other. By connecting metal layer 222, metal layer 251, and metal layer 251' with connecting wires respectively and by connecting metal layer 251, metal layer 242, and metal layer 242' with connecting wires respectively, curvature like that of an octopus is available since leg portion makes curvature movement of S shape.

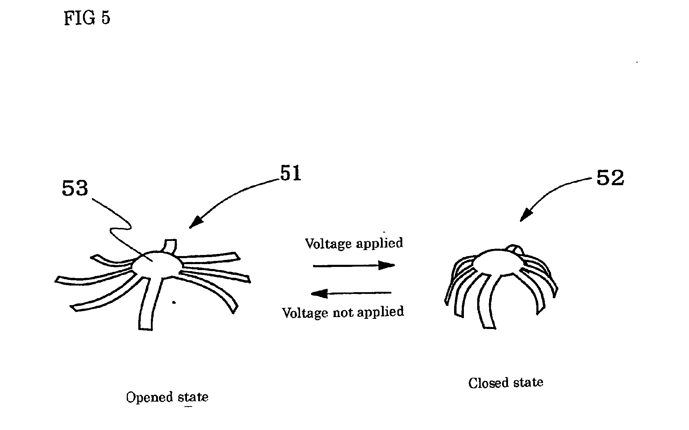

Fig.5 is a figure which shows one embodiment of a jelly fish model which can be used for said display device for appreciation. While in the octopus model in Fig.2, one leg portion is composed of 3 actuator elements, in jelly fish model 51, one leg portion is composed of one actuator element. Body portion 53 can be provided with a power source or coils for generating power. By providing a power source or coils for generating power, electric power can be provided to a leg portion thereby enabling the leg portion to curve. By the curvature movement of said leg portion, as shown in Fig.5, leg closed state 52 or leg opened state 51 is available. For information, as said actuator elements, known actuator elements can be used and for example, elements to which metal electrode is connected by electroless deposition of ion exchange resin can be used.

As creature models, other than aforementioned octopus models or jelly fish models, snake models, shell models, and sea weed models can be used. For example, a leg portion of octopus models shown in Figs 2 to 4 can be used alone or can be used in a bundle, thereby making snake models or shell models. As sea weed models, actuator elements can be used in a portion which is seen like a hand of clione models, thereby making the behavior of clapping. Further, as said creature models, other than aforementioned, the kinds of creatures are not limited and models for invertebrates including sea hares or sea cucumbers and/or models for vertebrates can be used. In addition, since creature models are provided in liquid which is stored in a water tank for appreciation, these models are preferably models of aquatic animals for showing more real taste.

In Figs 2 to 5, embodiments of creature models are shown. Actuator elements used for models of these embodiments can show swaying motion by controlling the phase of voltage applied for electric potential and by making these elements curve. Methods for controlling the phase of electric potential are not specifically limited. For example, the phase of electric potential applied to actuator elements can be controlled by connecting actuator elements to a power source or coils for generating power through a control device therebetween. In addition, by controlling the conductivity of coils provided in a water tank for appreciation, the phase of electric potential can also be controlled by controlling the induced current by coils for generating power.

In addition, instead of using aforementioned creature models, as a display device for appreciation using the aforementioned water tank for appreciation, non-creature models or objects such as submarines, airships, airplanes, and the like can be used. Further models of creatures other than aquatic animals such as those of butterflies or of birds can be used. By using models or objects that are other than aquatic animals, said display device for appreciation can provide viewers with pseudo spaces such as underwater space or air space regarding the creatures and/or objects which float in the air.

Further, in said models, light-emitting diode can be provided. By the movement of models caused by the convection of said water tank for appreciation, models move softly and with the light by light-emitting diode, the models can provide softer impression for the viewers of the display device for appreciation in the dark room. Said light-emitting diode can be provided both inside and outside of the models. Although the electric power supplied to said light emitting diode may be supplied from the power source of batteries and the like which are installed in the models, it is preferable that the electric power is supplied from the coils for generating power to light-emitting diode in order to make movement of models more smooth by making said models light weighted. As said light-emitting diodes, known light-emitting diodes can be used and the kinds thereof are not specifically limited. Said light-emitting diodes may be provided with models together with actuator elements or may be provided with the models which are not provided with actuator elements.

Although said liquid when used for a water tank for appreciation provided with fish models which are provided with said polymeric actuator is liquid which is stored in a water tank for appreciation and in which said fish models are put, it is an aqueous solvent including water as a main ingredient or an oily solvent whose main ingredients are organic solvents such as alcohols and it is not specifically limited and for the convenience of making said fish models float, in order to adjust specific gravity accordingly, electrolytes or alcohols can be contained in an aqueous solvent. For information, when a fin portion as a whole is a bimorph structured actuator, it is preferable that said liquid is a solution of electrolyte which contains specific dopant ion in specific concentration.

Regarding a water tank for appreciation, the explanation was made as mentioned above when using fish models. Models which are put in liquid stored inside of said water tank for appreciation are not limited to fish models and creature models such as octopus models, jelly fish models, and the like can be used.

### Industrial applicability

By using a water tank for appreciation of the present invention, when using the water tank for appreciation of the present invention is used as a pseudo aquarium, a display of fish models which are pseudo models of aquatic animals in a water tank swimming more naturally can be provided without unnatural behavior such as imbalance due to adhesion of air bubbles to fish models, sudden rising of fish models near the air bubble generating member, and lying near the water surface and the like, and further, display is also available regarding creatures and/or objects represented by fish, submarines, spaceships, airships, butterflies, birds and the like which float space in pseudo space such as underwater space or in the air.

## Claims

1. A water tank for appreciation provided with a water storage, a water pipe, an air bubble generating member, wherein
(1) said water storage is provided with a water inlet port and an opening portion,
(2) said opening portion is so provided that the convection is generated in said water tank for appreciation by liquid flow from a water tank through said opening portion,
(3) said water storage is provided upwardly of a water tank for appreciation,
(4) one end of said water pipe is connected to a water inlet port of a water storage and the other end is so installed that the other end is in liquid when filled with liquid in a water tank for appreciation, and
(5) an air bubble generating member is so installed that can lead air bubble inside of said water pipe in the periphery of said other end of said water pipe.

2. A water tank for appreciation as set forth in claim 1 provided with at least 2 coils wound along the periphery of said water tank for appreciation.

3. A water tank for appreciation as set forth in claim 2, wherein coils wound along the peripheral of said water tank for appreciation are so provided that the distance between neighboring coils are set to be the length of not greater than 200 % of a coil diameter in said water tank for appreciation.

4. A water tank for appreciation as set forth in claim 2, wherein coils wound along the peripheral of said water tank for appreciation are so provided that the distance between neighboring coils are set to be the length of from 80 to 120 % of a coil diameter in said water tank for appreciation.

5. A water tank for appreciation as set forth in claim 2, wherein the turn of coils wound along the periphery of said water tank for appreciation is 20 to 200 turns.

6. A water tank for appreciation as set forth in claim 2, wherein the turn of coils wound along the periphery of said water tank for appreciation is 40 to 60 turns.

7. A display device for appreciation provided with models in liquid store in a water tank for appreciation,
wherein said water tank for appreciation is provided with a water storage, a water pipe, and an air bubble generating member,
said water storage is provided with a water inlet port and an opening portion,
said opening portion is so provided that the convection is generated in said water tank for appreciation by liquid current from a water tank through said opening portion,
said water storage is provided upwardly of a water tank for appreciation,
one end of said water pipe is connected to a water inlet port of a water storage and the other end is so installed that the other end is in liquid when filled with liquid in a water tank for appreciation, and
an air bubble generating member is so installed that can lead air bubble inside of said water pipe in the periphery of said other end of said water pipe.

8. A display device for appreciation as set forth in claim 7, wherein said models are creature models.

9. A display device for appreciation as set forth in claim 8, wherein said creature models use actuator elements in driving portions.

10. A display device for appreciation as set forth in claim 8, wherein said creature models include at least one selected from the group of fish models, jelly fish models, octopus models, snake models, shell models, and sea weed models.

11. A display device for appreciation as set forth in claim 8, wherein said creature models are models of invertebrates and/or vertebrates.

12. A display device for appreciation as set forth in claim 9, wherein said actuator elements are polymeric actuator elements in which 2 metal layers are laminated through solid electrolyte therebetween.

13. A display device for appreciation as set forth in claim 9, wherein said creature models are provided with coils for generating power.

14. A fish model wherein said fish model is provided with said actuator elements between a body portion and a fin portion and / or a display device for appreciation as set forth in claim 10, wherein said actuator elements form a fin.

15. A display device for appreciation as set forth in claim 7, wherein said models are provided with light-emitting diode.

16. A display device for appreciation as set forth in claim 15, wherein said creature models are provided with coils for generating power.

17. A display device for appreciation as set forth in claim 7, wherein said water tank for appreciation is provided with at least 2 coils wound along the periphery of said water tank for appreciation.

18. A display device for appreciation as set forth in claim 17, wherein coils wound along the peripheral of said water tank for appreciation are so provided that the distance between neighboring coils are set to be the length of not greater than 200 % of a coil diameter in said water tank for appreciation.

19. A display device for appreciation as set forth in claim 17, wherein coils wound along the peripheral of said water tank for appreciation are so provided that the distance between neighboring coils are set to be the length of from 80 to 120 % of a coil diameter in said water tank for appreciation.

20. A water tank for appreciation as set forth in claim 17, wherein the turn of coils wound along the periphery of said water tank for appreciation is 20 to 200 turns.

21. A water tank for appreciation as set forth in claim 17, wherein the turn of coils wound along the periphery of said water tank for appreciation is 40 to 60 turns.
